# EUROPEAN PATENT APPLICATION

(11) **EP 0 663 604 A1**
(43) Date of publication of application: **19.07.1995**
(21) Application number: 94309339.3
(22) Date of filing: 14.12.1994
(51) Int. Cl.: G02B 27/28, G02F 1/01, H04B 10/148, G02B 5/30

(54) **Polarization rotator**

(30) Priority: 03.01.1994 US 176060
(71) Applicant: AT&T Corp., New York, NY 10013-2412 (US)
(72) Inventor: Jameson, Ralph Stephen, Allentown, Pennsylvania 18104 (US)
(74) Representative: Johnston, Kenneth Graham

(57) **Abstract**

An optical rotator capable of rotating the state of polarization of an input light beam in any state of polarization to any other state of polarization comprises three variable rotators (22,24,26) disposed in succession along a light path (Q). Each rotator has an optical axis and the optical axes of successive rotators are disposed at 45 degrees relative to one another, e.g., at 0, 45 and 90 degrees, respectively. Preferably, the variable rotators each comprises a liquid crystal cell providing a variable amount of light rotation under control of a voltage applied across electrodes of the cell.

## Description

### Background of the Invention

This invention relates to a polarization rotator, that is, to an apparatus for changing the state of polarization of polarized light.

In various uses of polarized light, it is often desired that the state of polarization of the light be changed either to a preselected polarized state or to a number of successively different states. An example of the latter use, with which the present invention has particular utility, is in the testing of optical devices, e.g., optical isolators having optical fiber pigtail inputs.

In such isolators, the degree of attenuation of the light passing through the isolator is a function of the polarization state of the light. However, because the isolator is intended for use with light of unknown and varying states of polarization, it is desirable that the range of variation of the attenuation be as small as possible and at least within a preselected range of variation. To this end, as part of manufacturing control, polarized light is passed through the isolator and the intensity of the light output from the isolator is monitored as the polarization state of the input light is varied.

The actual data required in the monitoring process is the maximum and minimum output light intensities for a given intensity input light. Obtaining the needed data requires that the light supplied to the isolator includes those polarization states which are maximally and minimally transmitted through the isolator.

Typically, the test procedure used is to rotate the polarization state of the light transmitted to the device being tested and, during the test procedure, provide different polarization states including those states which are maximally and minimally attenuated by the device. Such polarization states are typically generated by a light rotator manipulated by a trained operator. Thus, by monitoring a meter measuring the intensity of light exiting the test device, the operator can, on a trial and correct basis, that is, without actually knowing the state of polarization of the testing light, sequentially vary the polarization states of the light exiting the rotator and transmitted to the isolator for causing the meter readings to either continuously increase to a maximum reading or to continuously decrease to a minimum reading. In this fashion, the operator can be reasonably assured that the maximum and minimum readings obtained correspond to the actual minimum and maximum attenuations provided by the isolator.

One type of commonly used optical rotator, for manual manipulation, comprises a continuous length of optical fiber which is formed into two or more successive loops, with each loop being mounted on a respective one of side by side flaps mounted for rotation about a common axis lying in the planes of the loops. By rotating the flaps relative to one another, the angles between the planes of the two loops can be continuously changed. When an optical fiber is bent, i.e., into a loop, the stress in the fiber produces a birefringence of the light. By adjusting the angles of the loops relative to one another, the polarization state of the light passing through the fiber is changed. Different polarization states are produced as the loop angles are continuously changed.

The use of such looped fibers for changing polarization states is described by Koehler and Bowers, "In-line Single-mode Fiber Polarization Controllers ...", 1 Feb. 1985, Vol. 24, No. 3, Applied Optics.

Generally, the aforedescribed test process, using the manually operated flap optical rotator, provides accurate test results, i.e., maximum and minimum light intensities resulting from the availability, from the optical rotator, of all possible states of light polarization. However, the test procedure is slow and tedious, and, with fatigue and boredom, even a trained operator can easily make mistakes. The process can be automated, using a mechanical means for sequentially rotating the flaps relative to one another and electrical circuit means for detecting and reading out the maximum and minimum measured outputs. However, even when automated, the process, involving physical movements of flaps, is inherently slow. Also, light transmission through a fiber is a function of the degree of twist of the fiber, and by varying the fiber twist, during manipulation of the flaps, a variable transmission loss is introduced which can distort the test data.

A desired goal, therefore, is to replace the rotatable flap polarization rotator with a more practical device, particularly one which is purely electrically operable and without movable mechanical parts. This is accomplished by this invention.

It is first noted, however, that the use of electrically operated polarization rotators are known and commercially available, and a particularly relevant device with respect to the present invention is known as a "Senarmont Rotator." Such Rotator utilizes a liquid crystal cell of the twisted nematic type which, as known, is effective for rotating polarized light passing therethrough. In the Rotator, the liquid crystal cell is used with its optical axis oriented at 45 degrees relative to a fixed quarter waveplate. The quarter waveplate provides a fixed degree of rotation of the polarized light passing therethrough and the liquid crystal cell provides a variable degree of rotation dependent upon the voltage applied across electrodes of the cell.

The purpose of the Senarmont Rotator is to rotate an input beam of light in a known linear polarized state to another, preselected linear polarized state. However, linear polarized states comprise only a small portion of all possible polarization states, and Senarmont Polarizers are not used in test procedures of the type hereinbefore described requiring rotation of a test light of unknown polarization state into any of all possible polarization states.

### Summary of the Invention

For rotating a polarized light from any polarization state to any other possible polarization state, an apparatus is provided comprising three successive variable optical rotators with optical axes oriented at approximately 45 degrees relative to one another. In a preferred embodiment, the variable optical rotators comprise liquid crystal cells successively oriented at 0 degrees, 45 degrees, and 0 degrees, with each cell providing a variable rotation under control of voltages applied across the cells. In use, selected voltages are applied across the electrodes of each cell for controlling the degree of rotation provided by each cell, whereby an input beam of polarized light of a given polarization state emerges, having after passing through the three cells, with any of all possible polarization states.

For use in testing optical devices, as previously described, the cell voltages are varied while the attenuation of light by the optical device is measured in order to produce the states of polarization having minimum and maximum attenuation.

### In the Drawing

Figs. 1, 4 and 5 are perspective views of mathematical constructions known as Poincare Spheres used herein for analyzing the functioning of light rotators;
Fig. 2 is a schematic view of a Senarmont Rotator; and
Fig. 3 is a schematic view of a rotator in accordance with this invention.

### Description of Preferred Embodiments

For purposes of describing the present invention, use is made of a "Poincare sphere". Such sphere is described, for example, in "Principles of Optics", Sixth Edition, Born and Wolf, Pergamon Press, New York, 1986, pages 30 - 36. As explained by Born and Wolf, for every possible state of polarization of a plane monochromatic wave there corresponds one point on the spherical surface of a Poincare sphere. Also, as described in the previously cited article by Koehler and Bowers in Applied Optics, it is possible, in some instances, to trace the change in polarization state of a light beam, i.e., its change from one point on the Poincare sphere to another point thereon, as a line projected onto the sphere surface resulting from a rotation of the sphere about a particular axis. For example, the result of passing polarized light through a quarter waveplate can be represented by rotating the Poincare sphere 90 degrees about an axis thereof determined by the orientation of the waveplate.

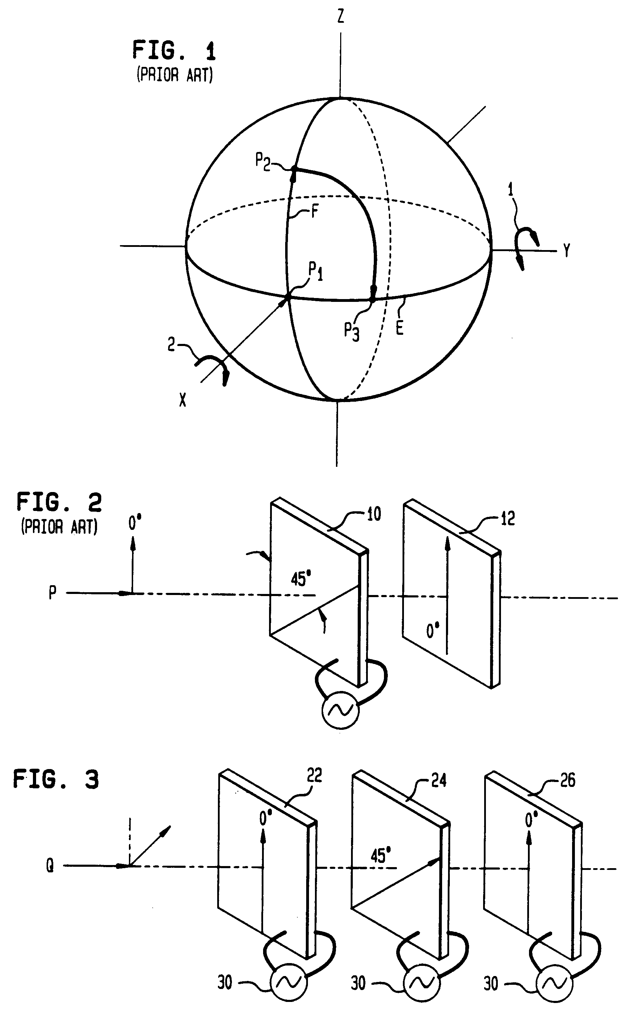

Fig. 1 shows a Poincare sphere formed around an X, Y, Z set of axes. Each point on the sphere surface has a unique set of three coordinates corresponding to a particular state of polarization. As explained by Born and Wolf, page 31, linear polarization is represented by points in the equatorial plane, that is, along the great circle (E) lying in the X-Y plane.

Fig. 1 illustrates the operation of the previously described Senarmont Rotator. The Senarmont Rotator comprises (Fig. 2) a variable waveplate rotator 10, e.g., a liquid crystal cell, and a quarter waveplate 12. An input light beam P passes in succession through the two rotators 10 and 12. Senarmont Rotators are used for rotating an input beam of linear polarized light with a specified plane of polarization to an output beam of linear polarized light with a selected plane of polarization. For purposes of analysis, this specified plane is arbitrarily defined as being vertically oriented, which places the point P₁ (Fig. 1) representing the input light P directly on the X axis (at 0 degrees on the equatorial circle E). The first rotator 10 (Fig. 2) is oriented with its optical axis at 45 degrees with respect to the plane of polarization of the input light.

In this context, the optical axis of an optical rotator is the direction of polarization of incident linear polarized light such that the optical rotator does not rotate the polarization of the light.

As described by Koehler and Bowers, passing light through a rotator oriented at a certain angle A with respect to a selected reference direction produces a rotation of the light corresponding to a rotation of the Poincare sphere around an axis disposed at an angle 2A from the point representing the reference direction. Thus, with a 45 degree orientation of the first rotator 10 with respect to the point P₁ (selected as the reference direction at 0 degrees), the axis of rotation of the sphere is along an axis spaced 90 degrees from P₁, i.e., along the Y axis of the sphere.

The amount of sphere rotation is a function of the amount of rotation provided by the rotator. In the Senarmont Rotator, the liquid crystal cell rotator 10 is a variable rotator under control of the amplitude of the voltage applied across the cell two electrodes. The effect of the rotator 10 on the light is thus illustrated in Fig. 1 as a partial rotation of the sphere about the Y axis for moving the point P₁ along a great circle F in the X-Z plane to some point P₂. The point P₁ can thus be rotated, or "mapped", to any point on the great circle F.

The rotated light, now at P₂ on the sphere, then passes through the quarter waveplate 12 which provides a fixed rotation of the light. The rotator 12 is oriented at 0 degrees with respect to the input light, hence rotation of light through this rotator corresponds to a rotation of the sphere about the X axis (at 0 degrees) through 90 degrees. Accordingly, the point P₂, wherever it is located on the great circle F, is rotated back to the equatorial great circle E at, in this example, the point P₃. Thus, by selecting the amount of rotation provided by the first rotator 10, the linearly polarized input beam (point P₁) can be rotated to any point on the great circle F, and from there, onto a corresponding point on the equatorial circle E, hence to any possible linear polarization state.

In a Senarmont Rotator, a linearly polarized light is rotatable into all other possible states of linear polarization. However, this hardly begins to satisfy the requirements for a rotator of the type previously described requiring, in terms of the Poincare sphere, the rotation of any point on the sphere to any other point on the sphere.

This is achieved according to the invention as follows. As shown in Fig. 3, a rotator apparatus 20 is provided comprising three successive variable polarization rotators 22, 24 and 26. Such rotators can be of known type, e.g., liquid crystal cells of the twisted nematic type such as those used for the variable rotator 10 of the Senarmont Rotator previously described.

As schematically illustrated in Fig. 3, a variable voltage source 30 is connected to electrodes on each liquid crystal cell, whereby the voltage applied across each cell can be varied independently of the voltages being applied across the other cells. Thus, the light rotation provided by each cell can be independently varied.

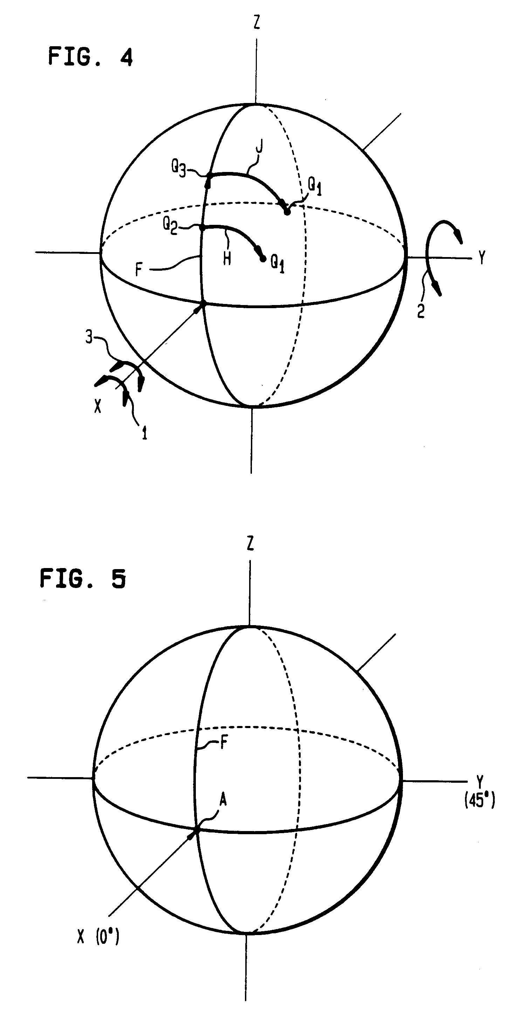

The three rotators are oriented at approximately (as discussed hereinafter) 45 degrees with respect to one another, e.g., at 0, 45 and 0 degrees, respectively. As input polarized light passes successively through the three variable rotators, the rotation of the light through each rotator can be represented by successive rotations of the sphere (Fig. 4) first around the X axis (0 degrees), then around the Y axis (45 degrees) and then again around the X axis (0 degrees). Orientation of the rotators at 0, 45 and 90 degrees also produces rotations around the X, Y and X axes in succession.

The result of such sphere rotations, each being variable under control of the voltages applied across the two electrodes of each cell, is that any arbitrary (i.e., unknown) point Q on the sphere can be mapped to any other point on the sphere. An example illustrating this is now described in connection with Fig. 4.

The point Q₁ in Fig. 4 corresponds to an elliptically polarized light beam. Passage of the light beam through the first rotator 22 corresponds to a rotation of the sphere about the X axis, and the point Q₁ moves along the arc H to the point Q₂, on some great circle F. Then, rotation of the sphere about the Y axis (passage through rotator 24) moves point Q₂ along the great circle F to any point Q₃ along circle F. Rotation of the sphere again about the X axis (rotator 26) moves point Q₃ along the arc J to any point Q₄ therealong.

It can be shown, and indeed is self-evident, that by the three successive sphere rotations, any point on the sphere can reach any other point on the sphere. What is perhaps not self-evident is that three such rotations are necessary rather than only two. An example of where two successive rotations will not suffice is now given in connection with Fig. 5.

In the case where linear polarized light at 0° is incident first upon a rotator at 0°, then one at 45°, the first rotator (22) has no effect upon the state of polarization of the light. Hence, only those states of polarization represented by the great circle F can be accessed by rotation by the second rotator (24). A third rotator is thus required to access the full Poincare sphere.

As noted, variable optical rotating liquid crystal cells are known. Such cells are commercially available, e.g., from Meadowlark Optics, Longmont, Colorado.

Also, while variable liquid crystal rotators are presently preferred, other known electrically operable variable rotators can be used. One example is a variably stressed quartz plate, where the degree of rotation of light passing through the plate is a function of the mechanical stressing of the plate. Variable mechanical stressing is obtained by an electrically operated piezoelectric transducer mounted on surfaces of the plate.

As previously explained, the inventive variable rotator is operated by varying the voltages across the electrodes of the liquid crystal cells. This can be done similarly as with the previously described rotatable flap rotator. That is, an operator can monitor the polarization state of the output light, or the amplitude of light passing through a device being tested, and vary the different electrode voltages in response to the results being produced. The process can also be automated using appropriately programmed computer means.

In such testing processing, the polarization state of the input light generally is not known. This is because, even if the polarization state from the light source is known, variable rotations of state can occur as the light passes through a flexible fiber optic cable to the device being tested. Thus, in the testing procedure, the optical rotator must be capable of generating all possible states of polarization from any input state.

Conversely, if the input and output states are known, the voltages applied across the three cells can be preselected based upon prior experience and the use of look-up charts.

As described, the optical axes of the three rotators are oriented at 45 degrees relative to one another. Three rotators are used to avoid any gaps in the achievable output states. However, the use of three rotators provides a certain degree of redundancy or overlapping, i.e., most input points on the sphere can reach any other point on the sphere by a number of different routes. What this means is that if the various optical axes of the rotators are not exactly 45 degrees off-set from one another, the rate of fall-off of all possible output states from all possible input states occurs relatively slowly. As a practical matter, generally adequate results are obtainable if the optical axes of the successive rotators are disposed at 45 degrees relative to one another, plus or minus 7.5 degrees.

While the inventive variable rotator is illustrated herein only schematically, persons of skill in the optical arts will know how to build actual apparatus. This is because optical rotators are generally known, and, in particular, variable, electrically operable, liquid crystal cell rotators are commercially available and are commonly used in optical apparatus.

Finally, while the use of variable light rotators are known, such rotators are not electrical equivalents of the mechanical flap rotators previously described. In such flap rotators, the degree of light retardation by each flap is fixed, and different amounts of rotation are achieved by varying the angle of retardation between the different flaps. Conversely, in the variable rotators, e.g., the liquid crystal cells used according to the invention, the angles of light retardation of the rotators are fixed, but the degree of retardation is varied.

## Claims

1. A light polarization rotator apparatus for varying the state of polarization of an input beam of light to any other possible state of polarization, the apparatus having an optical path for passage therealong of an input beam of light and comprising three variable optical rotators disposed in succession along said path, each of said rotators having an optical axis, the optical axes of successive rotators being oriented at approximately 45 degrees relative to one another, the amount of light rotation provided by each of said rotators being variable, and means for independently varying the amount of rotation provided by each said rotator.

2. An apparatus according to claim 1 wherein the amount of light rotation provided by each of said rotators is a function of the amplitude of a voltage applied to the rotator, and said means for varying the amount of rotation comprise variable voltage supplies connected to each of said rotators.

3. An apparatus according to claim 2 wherein each of said rotators comprises a liquid crystal cell.

4. An apparatus according to claim 1 wherein said axes are oriented at 45 degrees relative to one another, plus or minus 7.5 degrees.

5. An apparatus according to claim 2 wherein each of said rotators comprises a variable stressed quartz plate.
